# DEMANDE DE BREVET EUROPEEN

(11) **EP 3 070 359 A1**
(43) Date de publication de la demande: **21.09.2016**
(21) Numéro de dépôt: 16155820.0
(22) Date de dépôt: 16.02.2016
(51) Int. Cl.: F16D 23/06

(54) **DISPOSITIF DE SYNCHRONISATION DE BOITE DE VITESSES**

(30) Priorité: 16.03.2015 FR 1552117
(71) Demandeur: Peugeot Citroën Automobiles SA, 78140 Vélizy-Villacoublay (FR)
(72) Inventeur: WASCHEUL, Michael, 78260 ACHERES (FR); LELASSEUX, Xavier, 92000 NANTERRE (FR)

(57) **Abrégé**

L'invention a trait à un dispositif de synchronisation (10) de boîte de vitesses, notamment de véhicule automobile, ledit dispositif comprenant : un arbre de transmission (8) ; un moyeu (12) ; un jonc élastique circulaire (24) logé dans une gorge (27) du moyeu (12) ; un manchon (16) monté sur le moyeu (12), ledit manchon (16) comprenant sur sa face intérieure au moins une surface de contact (28₀, 28₁, 28₂) avec le jonc (24) ; une roue dentée (14) montée libre en rotation sur l'arbre de transmission (8) ; le jonc (24) est monté fixe axialement dans la gorge (27) du moyeu (12) et la ou chacune des surfaces de contact (28₀, 28₁, 28₂) du manchon (16) comprend au moins deux, préférentiellement trois, renfoncements correspondant à des positions axiales de repos du manchon (16).

## Description

L'invention a trait au domaine des boîtes de vitesses. Plus particulièrement, l'invention a trait au domaine de la transmission mécanique de boîtes de vitesses.

Un véhicule automobile comprend généralement une boîte de vitesses permettant de transmettre un couple moteur provenant d'un groupe motopropulseur vers un train de roue. Une boîte de vitesses comprend généralement un arbre primaire et un arbre secondaire, l'arbre primaire étant relié au groupe motopropulseur via un embrayage, l'arbre secondaire étant relié au train de roues à entrainer. Les arbres primaire et secondaire comprennent des roues dentées de différents diamètres transmettant le couple moteur selon le rapport de vitesse enclenché. Une boîte de vitesses comprend généralement des dispositifs de synchronisation des vitesses de rotation des roues dentées par rapport aux arbres sur lesquelles elles sont montées. Un dispositif de synchronisation comprend généralement un moyeu solidaire de l'arbre de transmission, des roues dentées de transmission de part et d'autre du moyeu, un manchon monté coulissant axialement sur, et lié en rotation avec, le moyeu ; et des moyens de synchronisation des vitesses situés entre le moyeu et chacune des roues dentées. On opère généralement l'armement de la vitesse correspondant à l'une des roues dentées par le déplacement du manchon vers la roue dentée correspondante ; au manchon en position équidistante entre les deux roues dentées, aucune des roues dentées n'est armée, la boîte de vitesses est alors au point neutre.

Le document de brevet FR 2 809 783 B1 divulgue un dispositif de synchronisation comprenant un moyeu solidaire d'un arbre de transmission, un manchon coulissant sur le moyeu le long de cannelures d'entrainement, une bague de synchronisation comprenant une couronne dentée et une surface tronconique destinée à coopérer par friction avec une surface correspondante réalisée sur la roue dentée. Le dispositif comprend également un jonc élastique situé entre le manchon et la couronne de synchronisation. Le manchon comprend sur sa surface interne des bossages aptes à coopérer avec des portions du jonc élastique, de sorte à ce que lors du déplacement axial du manchon, le jonc élastique est pressé entre la bague de synchronisation et les bossages du manchon ce qui réduit la différence de vitesse relative entre la bague de synchronisation et le manchon. Cette réduction de vitesse relative correspond au démarrage du processus d'armement d'une vitesse correspondante. Les surfaces de contact des bossages avec le jonc élastique étant tronconique, le jonc élastique se comprime avec la force axiale croissante appliquée sur le manchon. Les portions tronconiques des bossages compriment le jonc élastique dans le déplacement axial du manchon, et le dépasse en vue d'une mise en contact de la cannelure du manchon sur la couronne dentée de la bague de synchronisation de sorte à poursuivre la synchronisation par pression sur lesdites dents et ce jusqu'à l'enclenchement de la vitesse. Les bossages réalisés sur le manchon comprennent deux surfaces tronconiques inclinées opposées de sorte à pouvoir réaliser l'armement de deux roues situées en opposition par rapport au moyeu. La solution de cet enseignement est intéressante en ce qu'elle favorise le confort de l'armement des vitesses grâce à la pression entre le jonc élastique contre la bague de synchronisation précédant la mise en contact des cannelures avec la couronne dentée de la bague de synchronisation. Cette réalisation est cependant encombrante, le dispositif comprenant un jonc élastique de part et d'autre du moyeu, et les bossages du manchon devant être positionnés, au point neutre, à distance desdits joncs.

Le document de brevet FR 2 789 139 B1 divulgue un dispositif de synchronisation comprenant un moyeu solidaire d'un arbre de transmission, un manchon coulissant sur le moyeu le long de cannelures d'entrainement, plusieurs bagues de synchronisation comprenant des surfaces tronconiques destinées à coopérer entre elles par friction et avec une surface correspondante réalisée sur la roue dentée, la première d'entre ces bagues de synchronisation, directement adjacente au moyeu, comprenant une couronne dentée et des oreilles de positionnement dans des ouvertures de forme correspondante réalisées dans le moyeu. Le dispositif comprend également un jonc élastique situé entre le manchon et la couronne de synchronisation, ledit jonc étant logé dans une gorge périphérique réalisée sur la surface extérieure du moyeu. Le manchon comprend sur sa face interne plusieurs surfaces formant un profil en V et destinées à coopérer par contact avec le jonc élastique lors du déplacement axial du manchon par rapport au moyeu. Lors de son coulissement, un versant des surfaces en V du manchon comprime le jonc élastique et le presse contre des surfaces d'appui en périphérie des oreilles de positionnement de la première bague de synchronisation ce qui entraine son déplacement et la mise en friction des autres bagues jusque la roue dentée. L'autre versant des surfaces en V permet d'assurer la même fonction pour la synchronisation d'une roue dentée située à l'opposé de ladite roue dentée. La solution de cet enseignement est intéressante en ce que le dispositif est réalisé avec un unique jonc élastique d'armement de deux vitesses. La gorge est cependant nécessairement large pour assurer le déplacement du jonc par rapport au moyeu ce qui impacte la course d'armement et par conséquent l'encombrement du dispositif.

L'invention a pour objectif de proposer une solution palliant au moins un inconvénient de l'état de la technique, en particulier de l'état de la technique susmentionné. Plus particulièrement, l'invention a pour objet de proposer une solution de dispositif de synchronisation qui réduit son encombrement.

L'invention a pour objet un dispositif de synchronisation de boîte de vitesses, notamment de véhicule automobile, ledit dispositif comprenant : un arbre de transmission ; un moyeu fixé à l'arbre de transmission ; un jonc élastique circulaire logé dans une gorge du moyeu ; un manchon monté coulissant axialement sur, et lié en rotation avec, le moyeu, ledit manchon comprenant sur sa face intérieure au moins une surface de contact avec le jonc ; une roue dentée montée libre en rotation sur l'arbre de transmission ; le manchon étant apte à coopérer, par coulissement, avec la roue dentée en vue de synchroniser et de lier en rotation ladite roue avec l'arbre ; remarquable en ce que le jonc est monté fixe axialement dans la gorge du moyeu et la ou chacune des surfaces de contact du manchon comprend au moins deux, préférentiellement trois, renfoncements correspondant à des positions axiales de repos du manchon.

Selon des modes particuliers de réalisation, le dispositif de synchronisation peut comprendre l'une ou plusieurs des caractéristiques suivantes, prises isolément ou selon toutes les combinaisons techniquement possibles :
- le jonc comprend au moins trois portions s'étendant radialement en saillie de la gorge pour coopérer avec la ou les surfaces de contact du manchon.
- le manchon comprend sur sa face intérieure au moins trois bossages formant les surfaces de contact coopérant avec les portions en saillie du jonc.
- la ou les surfaces de contact sont circulaires avec un profil transversal comprenant au moins deux, préférentiellement trois, portions en V, adjacentes formant les renfoncements.
- la roue dentée est une première roue dentée, le dispositif de synchronisation comprenant une deuxième roue dentée montée libre en rotation sur l'arbre de transmission du côté du moyeu opposé à la première roue, le manchon étant apte à coopérer, par coulissement, avec la deuxième roue dentée en vue de synchroniser et de lier en rotation ladite roue avec l'arbre.
- il comprend un anneau formant la gorge logeant le jonc, ledit anneau étant logé dans une gorge auxiliaire plus large que ladite gorge logeant le jonc.
- le jeu axial de montage du jonc dans la gorge de l'anneau peut être inférieur à 0,4mm, préférentiellement inférieur à 0,1 mm.
- Le jeu axial de montage de l'anneau dans la gorge auxiliaire du moyeu peut être inférieur à 0,4mm, préférentiellement inférieur à 0,1 mm.
- chacun de l'anneau et du jonc est ouvert avec deux extrémités, la gorge de l'anneau comprenant à chacune des extrémités dudit anneau une cavité recevant une des extrémités dudit jonc.
- l'anneau comprend des pattes s'étendant axialement et logées dans des encoches correspondantes du moyeu.
- l'anneau est réalisé par moulage et venu de matière plastique.
- le dispositif comprend, en outre, un disque de friction, lié en rotation avec le manchon et monté coulissant par rapport audit manchon ; une bague de serrage du disque de friction contre la roue dentée ; la face intérieure du manchon formant un ou des épaulements aptes à entrer en contact avec la bague de serrage lors du coulissement dudit manchon, en vue de déplacer ladite bague vers ledit disque.

L'invention a également pour objet une boîte de vitesses, notamment de véhicule automobile, destinée à être reliée à une commande de passage de vitesse et apte à transmettre un couple entre un arbre primaire et un arbre secondaire, ladite boîte comprenant un ou plusieurs dispositifs de synchronisation des vitesses entre lesdits arbres, remarquable en ce qu'au moins un des dispositifs de synchronisation est conforme à l'invention.

D'autres caractéristiques et avantages de la présente invention seront mieux compris à l'aide de la description et des dessins parmi lesquels :
- La figure 1 est une vue d'une boîte de vitesses conforme à l'invention ;
- La figure 2 est une vue d'un dispositif de synchronisation conforme à l'invention de la boîte de vitesses de la figure 1 ;
- La figure 3 est une vue éclatée partielle du dispositif de synchronisation de la figure 2 ;

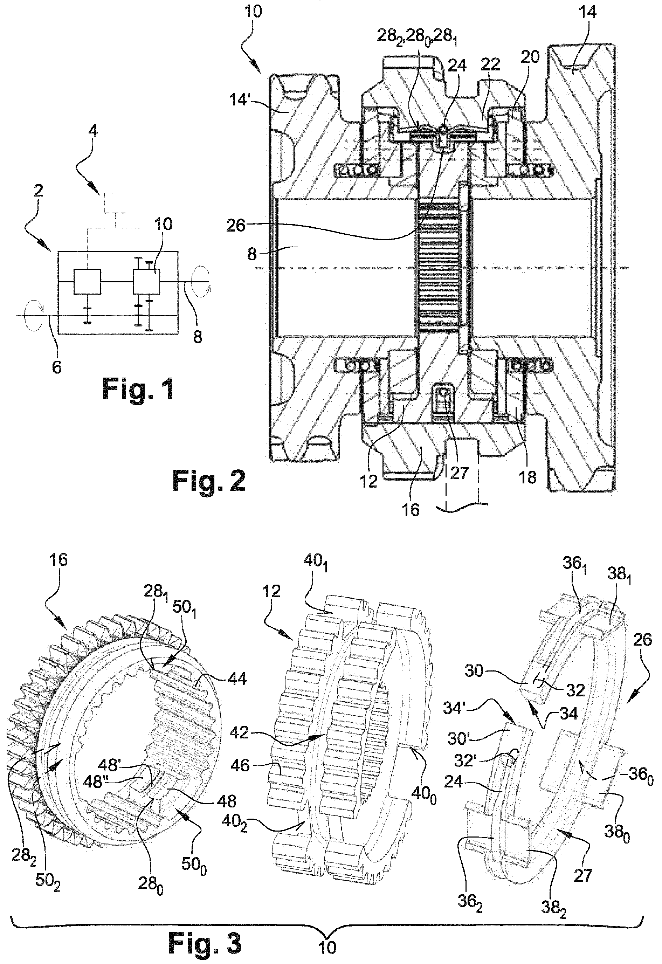

La figure 1 est une vue schématique d'une boîte de vitesses 2, notamment de véhicule automobile, conforme à l'invention. La boîte de vitesse 2 est destinée à être reliée à une commande de passage de vitesse 4 et apte à transmettre un couple de rotation entre un arbre primaire 6 et un arbre secondaire 8. Lorsque la boîte de vitesses 2 est connectée à un véhicule automobile (non représenté), l'arbre primaire 6 est connecté au vilebrequin d'un groupe motopropulseur via un embrayage et l'arbre secondaire 8 est relié aux roues tractant ou propulsant le véhicule. La boîte de vitesses comprend un ou plusieurs dispositifs de synchronisation 10 des vitesses entre lesdits arbres 6 et 8.

La figure 2 est une vue du dispositif de synchronisation 10 conforme à l'invention. Le dispositif comprend un arbre de transmission 8 correspondant en l'occurrence à l'arbre secondaire de la boîte de vitesses vue en relation avec la figure 1 ; un moyeu 12 fixé à l'arbre de transmission 8 ; une première roue dentée 14 montée libre en rotation sur l'arbre de transmission 8. La roue dentée 14 est engrenée avec une roue correspondante liée à l'arbre primaire vu en relation avec la figure 1. Le dispositif de synchronisation 10 comprend, en outre un manchon 16 monté coulissant axialement sur le moyeu 12 et également lié en rotation avec le moyeu 12. Le manchon 16 est relié à une fourchette (représentée en pointillée) de la commande de la boîte de vitesses, fourchette qui est apte, en cas de commande de passage de vitesse correspondant à la première roue dentée en question, à déplacer axialement le manchon coulissant 16 sur le moyeu 12. Le manchon 16 dans ce déplacement généré par la commande est apte à réaliser une synchronisation des vitesses de rotation de l'arbre de transmission 8 avec celle de la roue dentée 14 ; il est par ailleurs apte à réaliser une solidarisation entre l'arbre de transmission 8 et la roue dentée 14 de sorte à ce qu'un couple de rotation et une puissance correspondante de transmission puisse être transmise entre la roue dentée 14 et l'arbre de transmission 8. On peut voir sur l'image que le dispositif 10 comprend également une deuxième roue dentée 14' à l'opposé du dispositif de synchronisation 10 par rapport à la première roue dentée 14. Le manchon 16 dans un autre déplacement enclenché par une autre commande de passage de vitesse est également apte à coulisser dans une direction opposée à celle vers la première roue dentée 14, et ce en vue de se rapprocher de la deuxième roue dentée 14' en question. Dans cet autre déplacement, le manchon 16 est apte à synchroniser et solidariser l'arbre de transmission 8 avec la deuxième roue dentée 14'. La réalisation de la synchronisation ainsi que la réalisation de la solidarisation sont identiques pour les enclenchements des vitesses de rotation de l'arbre de transmission 8 correspondant à son entraînement par les première et deuxième roue dentées 14 et 14' ; ces réalisations sont vus plus en détail par après. La position neutre du dispositif de synchronisation 10 est une position intermédiaire du manchon 16 entre les première et deuxième roues dentées 14 et 14', cette position en question permet de ne pas solidariser l'arbre de transmission 8 ni à la première roue dentée 14, ni à la deuxième roue dentée 14'.

Le dispositif de synchronisation 10 comprend, en outre, un disque de friction 18, lié en rotation avec le manchon 16 et monté coulissant par rapport audit manchon, ainsi qu'une bague de serrage 20 du disque de friction 18 contre la roue dentée 14. La face intérieure du manchon forme des épaulements 22 aptes à entrer en contact avec la bague de serrage 20 lors du coulissement du manchon 16 sur le moyeu 12. La mise en contact du manchon 16 avec la bague de serrage 20 est destinée à déplacer ladite bague 20 vers ledit disque de friction 18 en vue de synchroniser et de lier en rotation l'arbre 8 avec la roue dentée 14.

Le dispositif de synchronisation 10 comprend, en outre, un jonc élastique circulaire 24 monté sur le moyeu 12. Plus précisément, le dispositif 10 comprend un anneau de montage 26 du jonc 24 sur le moyeu 12, l'anneau comprenant une gorge 27 pour le logement du jonc 24. On peut voir que le manchon 16 comprend sur sa face intérieure des surfaces de contact 28₀, 28₁, 28₂ avec le jonc 24. Ces surfaces de contact 28₀, 28₁, 28₂ forment trois renfoncements, ces derniers, lorsque les surfaces coopèrent avec le jonc 24, correspondant à des positions axiales de repos du manchon. On peut voir sur l'image le jonc 24 disposé dans le renfoncement médian maintenant le manchon 16 en position de repos au point neutre du dispositif 10. Les renfoncements de part et d'autre du renfoncement central correspondent à des positions de maintien axial du manchon, soit engagée vers la première roue 14, soit engagée vers la deuxième roue 14'.

La figure 3 est une vue éclatée partielle du dispositif de synchronisation 10 conforme à l'invention On peut voir de droite à gauche sur l'image, l'anneau 26 dans lequel est logé le jonc 24 de maintien comme introduit en relation avec la figure 2, puis le moyeu 12 sur lequel est monté l'anneau 26, puis enfin le manchon 16 coulissant sur le moyeu 12.

On peut voir que l'anneau 26 ainsi que le jonc 24 sont ouverts et comprennent deux extrémités, on peut voir précisément les extrémités 30 et 30' de l'anneau 26, et en pointillés les extrémités 32 et 32' du jonc 24 de maintien. On peut observer que la gorge 27 de l'anneau 26 logeant le jonc 24 comprend à chacune des extrémités des cavités 34 et 34' recevant les extrémités 32 et 32' du jonc 24. Cette mesure est intéressante pour éviter la rotation du jonc 24. On peut également voir que le jonc 24 comprend trois portions 36₀, 36₁, 36₂ (une est cachée sur l'image) s'étendant transversalement en saillie de la gorge 27. Ces trois portions en saillie sont destinées à coopérer avec les surfaces de contact 28₀, 28₁, 28₂ du manchon 16. L'anneau 26 comprend également des pattes 38₀, 38₁, 38₂ s'étendant axialement et logées dans des encoches 40₀, 40₁, 40₂ correspondantes du moyeu 12. La gorge 27 dans laquelle est logé le jonc 24 est ajusté axialement de sorte à ce que le jonc reste fixe axialement dans l'anneau 26. Le jeu axial de montage du jonc 24 dans la gorge 27 de l'anneau 26 peut être inférieur à 0,4mm, préférentiellement inférieur à 0,1 mm. L'anneau 26 est lui-même logé dans une gorge auxiliaire 42 réalisée dans le moyeu 12, gorge auxiliaire qui est plus large que la gorge 27 dans laquelle se situe le jonc 24. Cette mesure est intéressante pour faciliter l'usinage de la gorge auxiliaire 42 sur le moyeu 12. La gorge auxiliaire 42 du moyeu 12 est ajustée axialement de sorte à ce que l'anneau reste fixe axialement dans le moyeu 12. Le jeu axial de montage de l'anneau 26 dans la gorge auxiliaire 42 du moyeu 12 peut être inférieur à 0,4mm, préférentiellement inférieur à 0,1 mm. L'anneau 26 peut être en plastique ce qui facilite son montage sur le moyeu, il est par ailleurs obtenu par moulage.

Le manchon 16 comprend sur sa face intérieure des cannelures 44 aptes à coopérer avec des cannelures correspondantes 46 sur le moyeu 12. On peut également précisément voir sur la face intérieure du manchon 16 une 28₀ des surfaces de contact 28₀, 28₁, 28₂ avec le jonc. Ces surfaces sont circulaires avec un profil transversal comprenant trois portions en V adjacentes 48, 48' et 48" qui forment les renfoncements coopérant avec le jonc 24 pour le maintien en position de repos du manchon 16. En particulier, les renfoncements 48, 48' et 48" sont réalisés sur trois bossages 50₀, 50₁ et 50₂ et sont aptes à coopérer avec les portions en saillie 36₁, 36₂ et 36₃ du jonc. Les renfoncements réalisés sur les bossages 50₁ et 50₂ ne sont cependant pas visible sur l'image.

## Revendications

1. Dispositif de synchronisation (10) de boîte de vitesses, notamment de véhicule automobile, ledit dispositif comprenant :
- un arbre de transmission (8) ;
- un moyeu (12) fixé à l'arbre de transmission (8) ;
- un jonc élastique circulaire (24) logé dans une gorge (27) du moyeu (12) ;
- un manchon (16) monté coulissant axialement sur, et lié en rotation avec, le moyeu (12), ledit manchon (16) comprenant sur sa face intérieure au moins une surface de contact (28₀, 28₁, 28₂) avec le jonc (24) ;
- une roue dentée (14) montée libre en rotation sur l'arbre de transmission (8) ;
le manchon (16) étant apte à coopérer, par coulissement, avec la roue dentée (14) en vue de synchroniser et de lier en rotation ladite roue (14) avec l'arbre (8) ;
le jonc (24) étant monté fixe axialement dans la gorge (27) du moyeu (12) et la ou chacune des surfaces de contact (28₀, 28₁, 28₂) du manchon (16) comprenant au moins deux, préférentiellement trois, renfoncements (48, 48', 48") correspondant à des positions axiales de repos du manchon (16),
**caractérisé en ce que** le jonc (24) comprend au moins trois portions (36₀, 36₁, 36₂) s'étendant radialement en saillie de la gorge (27) pour coopérer avec la ou les surfaces de contact (28₀, 28₁, 28₂) du manchon (16).

2. Dispositif de synchronisation (10) selon la revendication 1, **caractérisé en ce que** le manchon (16) comprend sur sa face intérieure au moins trois bossages (50₀, 50₁, 50₂) formant les surfaces de contact (28₀, 28₁, 28₂) coopérant avec les portions en saillie (36₀, 36₁, 36₂) du jonc (24).

3. Dispositif de synchronisation (10) selon l'une des revendications 1 ou 2, **caractérisé en ce que** la ou les surfaces de contact (28₀, 28₁, 28₂) sont circulaires avec un profil transversal comprenant au moins deux, préférentiellement trois, portions en V, adjacentes formant les renfoncements (48, 48', 48").

4. Dispositif de synchronisation (10) selon l'une des revendications 1 à 3, **caractérisé en ce que** la roue dentée (14) est une première roue dentée, le dispositif de synchronisation (10) comprenant une deuxième roue dentée (14') montée libre en rotation sur l'arbre de transmission (8) du côté du moyeu (12) opposé à la première roue (14), le manchon (16) étant apte à coopérer, par coulissement, avec la deuxième roue dentée (14') en vue de synchroniser et de lier en rotation ladite roue (14') avec l'arbre (8).

5. Dispositif de synchronisation (10) selon l'une des revendications 1 à 4, **caractérisé en ce qu'**il comprend un anneau (26) formant la gorge (27) logeant le jonc (24), ledit anneau (26) étant logé dans une gorge auxiliaire (42) plus large que ladite gorge (27) logeant le jonc (24).

6. Dispositif de synchronisation (10) selon la revendication 5, **caractérisé en ce que** chacun de l'anneau (26) et du jonc (24) est ouvert avec deux extrémités (30, 30' ; 32, 32'), la gorge (27) de l'anneau (26) comprenant à chacune des extrémités (30, 30') dudit anneau une cavité (34, 34') recevant une des extrémités (32, 32') dudit jonc (24).

7. Dispositif de synchronisation (10) selon l'une des revendications 5 et 6, **caractérisé en ce que** l'anneau (26) comprend des pattes (38₀, 38₁, 38₂) s'étendant axialement et logées dans des encoches correspondantes (40₀, 40₁, 40₂) du moyeu.

8. Dispositif de synchronisation (10) selon l'une des revendications 1 à 7, **caractérisé en ce que** le dispositif comprend, en outre, un disque de friction (18), lié en rotation avec le manchon (16) et monté coulissant par rapport audit manchon ; une bague de serrage (20) du disque de friction (18) contre la roue dentée (14) ; la face intérieure du manchon formant un ou des épaulements (22) aptes à entrer en contact avec la bague de serrage (20) lors du coulissement dudit manchon (16), en vue de déplacer ladite bague (20) vers ledit disque (18).

9. Boîte de vitesses (2), notamment de véhicule automobile, destinée à être reliée à une commande (4) de passage de vitesse et apte à transmettre un couple entre un arbre primaire (6) et un arbre secondaire (8), ladite boîte (2) comprenant un ou plusieurs dispositifs de synchronisation (10) des vitesses entre lesdits arbres, **caractérisé en ce qu'**au moins un des dispositifs de synchronisation (10) est selon l'une des revendications 1 à 8.
